(19) Europäisches Patentamt

European Patent Office

Office européen des brevets

(11) Veröffentlichungsnummer : **0 039 904**
**B1**

(12) **EUROPÄISCHE PATENTSCHRIFT**

(45) Veröffentlichungstag der Patentschrift :
26.09.84

(21) Anmeldenummer : 81103451.1

(22) Anmeldetag : 07.05.81

(51) Int. Cl.³ : **A 01 C  3/02**

(54) **Güllemixer mit Zapfwellenantrieb.**

(30) Priorität : **13.05.80 DE 3018264**

(43) Veröffentlichungstag der Anmeldung :
**18.11.81 Patentblatt 81/46**

(45) Bekanntmachung des Hinweises auf die Patenter-
teilung : **26.09.84 Patentblatt 84/39**

(84) Benannte Vertragsstaaten :
**AT BE CH DE LI LU NL**

(56) Entgegenhaltungen :
**DE-A- 2 612 932**
**FR-A- 1 533 051**
**FR-A- 2 121 689**
**FR-A- 2 417 244**
**FR-A- 2 453 673**
**GB-A- 1 048 964**

(73) Patentinhaber : **Reck, Anton**
**Bussenstrasse 133**
**D-7941 Betzenweiler (DE)**

(72) Erfinder : **Reck, Anton**
**Bussenstrasse 133**
**D-7941 Betzenweiler (DE)**

(74) Vertreter : **Eisele, Eberhard, Dipl.-Ing. et al**
**Patentanwälte Eisele & Dr. Otten Goetheplatz 7**
**D-7980 Ravensburg (DE)**

EP 0 039 904 B1

## Beschreibung

Die Erfindung betrifft einen Güllemixer zum Antrieb mittels einer Zapfwelle eines Schleppers mit einem an das Dreipunkt-Lenkersystem des Schleppers anschließbaren Anbaurahmen und einem an diesem gelagerten auf und ab schwenkbaren Einschwenkarm, an dessen vom Schlepper weggerichtetem Ende ein rohrartiges Mixergehäuse zwischen einer etwa horizontalen Transportstellung und einer etwa vertikalen Einführstellung schwenkbar gelagert ist, und mit einem längenverstellbaren, zwischen dem Anbaurahmen und dem Einschwenkarm als Strebe eingebauten Stellorgan.

Güllemixer dieser Art sollen auch durch sehr kleine Grubenöffnungen eingebracht werden können. Dabei kommt es einerseits darauf an, den Einschwenkarm so steil nach oben zu stellen, daß das rohrartige Mixergehäuse in eine lotrechte oder nahezu lotrechte Stellung geschwenkt werden kann. Andererseits muß sich aber auch der Einschwenkarm in die Grubenöffnung stecken lassen. Dies setzt voraus, daß er bei jeder Unterlenker-Stellung, insbesondere bei hochgefahrenen Unterlenkern, sich auch nach unten neigen läßt.

Aus der DE-A-2 612 932 ist ein Güllemixer der einleitend beschriebenen Art bekannt, dessen längenverstellbares Stellorgan aus zwei parallel arbeitenden Hydraulikzylindern besteht. Der damit mögliche Schwenkwinkel des Einschwenkarms bezüglich des Anbaurahmens beträgt etwa 35° und ist viel zu klein, um den Einschwenkarm so weit wie angedeutet nach unten zu schwenken und in kleinste Grubenöffnungen einzuführen.

Eine Vergrößerung des Schwenkwinkels durch Verlängerung der Hydraulikzylinder ist wegen der Einbauverhältnisse im hochgeschwenkten Zustand des Einschwenkarms nicht möglich. Abgesehen davon sind Hydraulikzylinder teuer, empfindlich und angesichts der relativ seltenen Verwendung bei einem solchen Gerät unwirtschaftlich. Muß deshalb der Einschwenkarm steil nach unten geschwenkt werden, um ihn in eine kleine Grubenöffnung einführen zu können, so behilft man sich bei dem erwähnten und anderen bekannten Geräten damit, daß man den Oberlenker des Dreipunkt-Lenkersystems, gewöhnlich eine Kette, löst und mit anderer Länge wieder einhängt. Dies ist aber sehr gefährlich. Auch muß der Schlepperfahrer dazu öfters absteigen oder eine zweite Bedienungsperson zu Hilfe nehmen.

Der Erfindung liegt die Aufgabe zugrunde, einen Güllemixer vorzuschlagen, der sich vom Schlepperfahrer einfach und ohne abzusteigen sowie ohne Unfallrisiko in jede kleine Grubenöffnung einbringen läßt.

Diese Aufgabe wird ausgehend von einem Güllemixer der einleitend beschriebenen Art erfindungsgemäß dadurch gelöst, daß ein ausrückbarer Anschlag vorgesehen ist, der im eingerückten Zustand den Schwenkbereich des Einschwenkarms bezüglich der Unterlenker nach unten begrenzt. Somit läßt sich der Einschwenkarm in einer bezüglich der Unterlenker gestreckten oder leicht nach oben stehenden Stellung mittels der Unterlenker anheben und absenken, als ob er mit diesen starr verbunden wäre. Löst man jedoch die Stützklappe, was vom Fahrersitz aus geschehen kann, so schwenkt der Einschwenkarm frei nach unten durch.

Vorzugsweise wird der Anschlag als schwenkbare Stützklappe oder selbst einrastende Klinke ausgebildet. Auch ist es zweckmäßig, den Anschlag abzustufen, beispielsweise ihn mit sägezahnartigen Einschnitten zu versehen, so daß der Einschwenkarm bezüglich der Unterlenker unterschiedliche Winkelstellungen einnehmen kann. Ein solcher Güllemixer eignet sich deshalb für Schlepper ganz verschiedener Bauart und Bereifung.

Die Dreipunkt-Lenkersysteme schwerer Schlepper sind üblicherweise für sehr viel schwerere Anbaugeräte oder Gerätekombinationen ausgelegt, als es Güllemixer sind, z. B. für 10-Schaar-Pflüge. Es ist daher außerordentlich leicht möglich, durch eine kleine Unvorsichtigkeit bei der Bedienung während des Einbring- oder Aushebevorgangs den Güllemixer zu beschädigen. Es wird deshalb vorgeschlagen, daß die gegenseitige Beweglichkeit von wenigstens zweien der Teile des Güllemixers mittels eines abtrennbaren, verformbaren oder unter Überwindung eines Reibschlusses verlagerbaren Elements unter Bereithaltung eines Notlaufwegs begrenzt ist. Darunter ist eine Bruch- oder Überlastsicherung in der Weise zu verstehen, daß der Bruch, die Verformung oder Verlagerung des betreffenden Sicherheitselements einen kleinen zusätzlichen Bewegungsspielraum gibt, der ruckartig durchmessen wird. Dadurch wird der Schlepperfahrer aufmerksam, der Arbeitsvorgang braucht aber nicht unterbrochen zu werden.

Dieser Vorschlag läßt sich beispielsweise in Verbindung mit einer Stützklappe aus zwei gleichen Stützklinken in der Weise verwirklichen, daß die beiden Stützklinken durch eine die Unterlenkerverlängerungen überquerende und auf diese aufsattelbare Traverse miteinander verbunden sind und daß die für die Stützklinken verwendeten Achszapfen bei Überlast abscherbar sind. Im Überlastungsfall legt sich diese Traverse schlagartig auf die Unterlenkerverlängerungen auf. Dabei erkennt der Fahrer, daß er etwas falsch gemacht hat. Anschließend wechselt er dann die abgescherten Achszapfen gegen neue aus.

Es wird darauf hingewiesen, daß das längenveränderbare Stellorgan zwischen dem Anbaurahmen und dem Einschwenkarm zum Einbringen des Einschwenkarms in eine Grube mit enger Öffnung nicht erforderlich ist. Diese Aufgabe löst vielmehr der ausrückbare Anschlag. Das Stellorgan ist jedoch zum Einstellen der Neigung des Einschwenkarms während des Mixbetriebes, d. h. also zum Einstellen der Mixertiefe erforderlich. Besonders leicht und zweckmäßig ist ein Stellorgan, das einen Spindeltrieb und eine mit diesem gelenkig verbundene Lasche aufweist, also kniegelenkartig zusammengeklappt werden kann.

Solange die Unterlenker mit dem Einschwenkarm nur einen gestreckten oder nahezu gestreckten Winkel bilden, was stets der Fall ist, wenn sich der Güllemixer außerhalb der Grube befindet, ist dieses zweigliedrige Stellorgan voll ausgeknickt. Es kommt nicht zur Wirkung und stört nicht. Neigt sich der Einschwenkarm aber nach unten, so streckt sich das Stellorgan und hält den frei auskragenden Einschwenkarm in einer bestimmten Neigungslage, die durch Drehen der Spindel verändert werden kann.

Wird in dieser sogenannten Arbeitsstellung das Dreipunkt-Lenkersystem des Schleppers unbedacht vom Fahrer betätigt oder auch von einer fehlerhaft eingeschalteten hydraulischen Zugkraft-Regeleinrichtung selbsttätig bewegt, so können auf das Stellorgan unverhältnismäßig große Kräfte wirken. Um auch hier eine Bruchsicherung zu schaffen, wird vorgeschlagen, Scherschrauben anzubringen, welche beim Strecken des Stellorgans den Spindeltrieb und die Lasche bzw. die Laschen in einer nahezu gestreckten Winkelstellung arretieren. Bevor also ein tragendes Teil bricht, was meist auch mit Unfallgefahr verbunden ist, streckt sich das Stellorgan bzw. senkt sich der Einschwenkarm mit einem Ruck einige Zentimeter. Das Abscheren der erwähnten Schrauben zieht die Aufmerksamkeit des Fahrer auf sich. Er kann aber die Arbeit ungefährdet beenden und danach die Scherschrauben ersetzen.

Anstelle der Lasche könnte man an den Spindeltrieb auch ein nicht starres Zugorgan, beispielsweise ein Seil, anschließen und dieses in im Erfolg gleicher Weise dadurch sichern, daß man eine Öse bildet und die stellenweise nebeneinander gelegten Seilabschnitte durch eine Klemme zusammenspannt. Bei Überlast verkleinert sich die Öse ruckartig, ohne daß die Klemme verlorengeht.

Ein Ausführungsbeispiel der Erfindung wird nachfolgend anhand der Zeichnung beschrieben. Im einzelnen zeigt

Figur 1 eine Seitenansicht des Ankopplungsmechanismus eines Güllemixers an einen Schlepper,

Figur 2 einen Ausschnitt aus Fig. 1, wobei die Stützklinke eine andere Stellung einnimmt,

Figur 3 die Anordnung nach Fig. 1 in Arbeitsstellung beim Mixen,

Figur 4 eine Draufsicht der Anordnung nach Fig. 1 und

Figur 5 bis Figur 9 Seitenansichten des gesamten an einen Schlepper angekoppelten Güllemixers in kleinerem Maßstab und einer schematischen Darstellungsform in verschiedenen Stellungen.

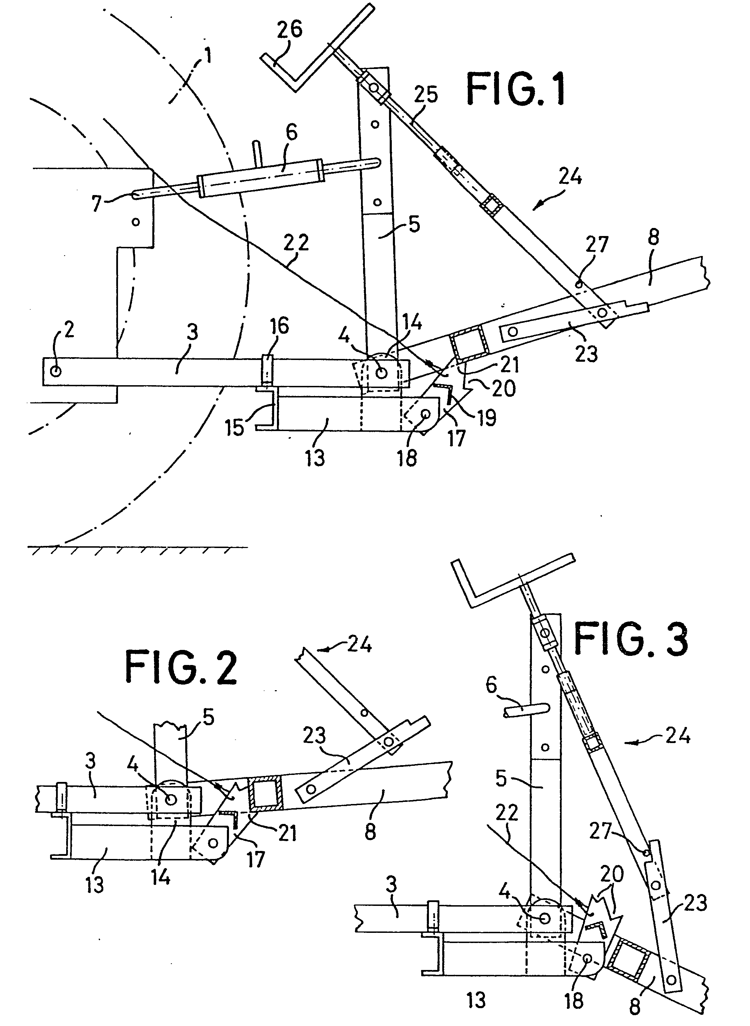

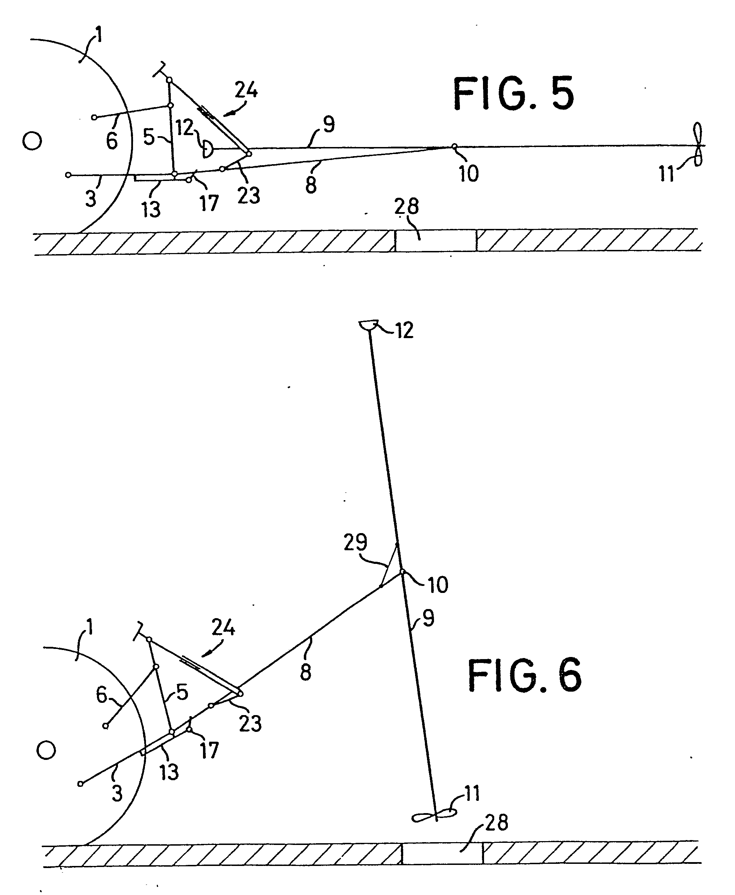

Die Figuren 1 bis 4 zeigen folgende konstruktive Einzelheiten. Ein Ackerschlepper, dessen Hinterreifen 1 strichpunktiert angedeutet ist, weist zwei um eine Achse 2 schwenkbare Unterlenker 3 auf. An ihren Enden ist mittels zweier Unterlenkerbolzen 4 ein dreieckiger Anbaurahmen 5 angelenkt, dessen oberer Teil mittels eines Oberlenkers 6 mit einem festen Anschlußpunkt 7 am Schlepper gelenkig verbunden ist. Um die horizontalen Unterlenkerbolzen 4 ist auch ein aus einem Bügel und zwei parallelen Holmen bestehender Einschwenkarm 8 gelagert. Die Holme nehmen in bekannter Weise ein Mixerrohr 9 (Fig. 5) auf, welches etwa auf halber Länge mit Hilfe von Querzapfen 10 am Holmende schwenkbar gelagert ist. In dem Mixerrohr 9 ist eine Propellerwelle gelagert, die an einem Ende wenigstens einen Propeller 11 und am anderen Ende einen von einer Manschette 12 umgebenen Gelenkwellenanschluß aufweist, welcher über eine Gelenkwelle mit der Zapfwelle des Schleppers verbindbar ist.

Jeder Unterlenker 3 ist mittels einer Verlängerungsschiene 13 über die Unterlenkerbolzen 4 hinaus nach hinten verlängert. Die Verlängerungsschienen haben nach oben stehende Lageraugen 14, welche zwischen den Unterlenkern 3 und den Schenkeln des Anbaurahmens 5 auf die Unterlenkerbolzen 4 gesteckt sind. Eine Querschiene 15, welche die Verlängerungsschienen 13 miteinander verbindet, legt sich unten an die Unterlenker 3 an und ist mit Hilfe zweier Laschen 16 lose mit diesen verbunden. An den nach hinten überstehenden Enden der Verlängerungsschienen 13 sind zwei Stützklinken 17 mittels zweier handelsüblicher Schrauben 18 gelagert, die speziell so bemessen sind, daß sie bei Überlastung abgeschert werden. Die Stützklinken sind mittels einer querschnittlich winkelförmigen Traverse 19, die sich quer über die Verlängerungsschienen 13 hinweg erstreckt, miteinander verbunden. Ferner haben die Stützklinken 17 zwei rechtwinklige Einschnitte 20, in die sich eine quer verlaufende Kante 21 des Bügelteils des Einschwenkarms 8 einzulegen vermag. Mittels eines dünnen Stahlseils 22 läßt sich die aus den Stützklinken 17 und der Traverse 19 bestehende Stützklappe vom Fahrersitz des Schleppers aus betätigen.

Als Stellorgan für die Mixtiefe ist ein mit zwei Laschen 23 gelenkig verbundener Spindeltrieb 24 vorgesehen. Dieser besteht aus einem gabelförmigen Mutterstück, einer Spindel 25, die in einem schwenkbaren Axiallager am oberen Ende des Anbaurahmens 5 gelagert ist und aus einer Handkurbel 26. An den Gabelschenkeln des Spindeltriebs 24 befindet sich je ein Scherstift 27, an den sich in der Stellung nach Fig. 3 die überstehenden Enden der Laschen 23 anlegen. Es sei hier noch einmal ausdrücklich angemerkt, daß dieses Stellorgan zum Einbringen des Güllemixers in die Grube nicht benötigt wird.

Anhand der Figuren 5 bis 9 wird im folgenden die Inbetriebnahme des Güllemixers, insbesondere das Einbringen in eine Grube mit sehr enger Öffnung beschrieben. Die Grubenöffnung 28 hat nur einen wenig größeren Durchmesser als der Propeller 11. Fig. 5 zeigt die Transportstellung, die auch in Fig. 2 dargestellt ist. Der Einschwenkarm 8 liegt jeweils in dem unteren der beiden Einschnitte 20 der Stützklinken 17, wobei die Unterlenker nur einen Winkel von etwa 5° mit dem Einschwenkarm 8 bilden. Das Mixerrohr 9 ist in eine horizontale Stellung geschwenkt, in der es auch am Einschwenkarm 8 festgelegt werden kann. Das Stellorgan, bestehend aus dem Spindeltrieb 24 und den Laschen 23, ist stark abgewinkelt und außer Funktion.

Der Fahrer hebt nun mit Hilfe der Schlepperhydraulik, die übrigens nicht im einzelnen dargestellt ist, die Unterlenker 3 bis in die obere Endstellung an. Der Einschwenkarm 8 steht jetzt so steil, daß das Mixerrohr 9 in eine nahezu lotrechte Stellung, die sogenannte Einführstellung geschwenkt werden kann. Um ein unerwünschtes Pendeln zu vermeiden, sind beide Teile mittels eines Seilstücks 29 so verbunden, daß das Mixerrohr leicht schräg und damit stabil steht.

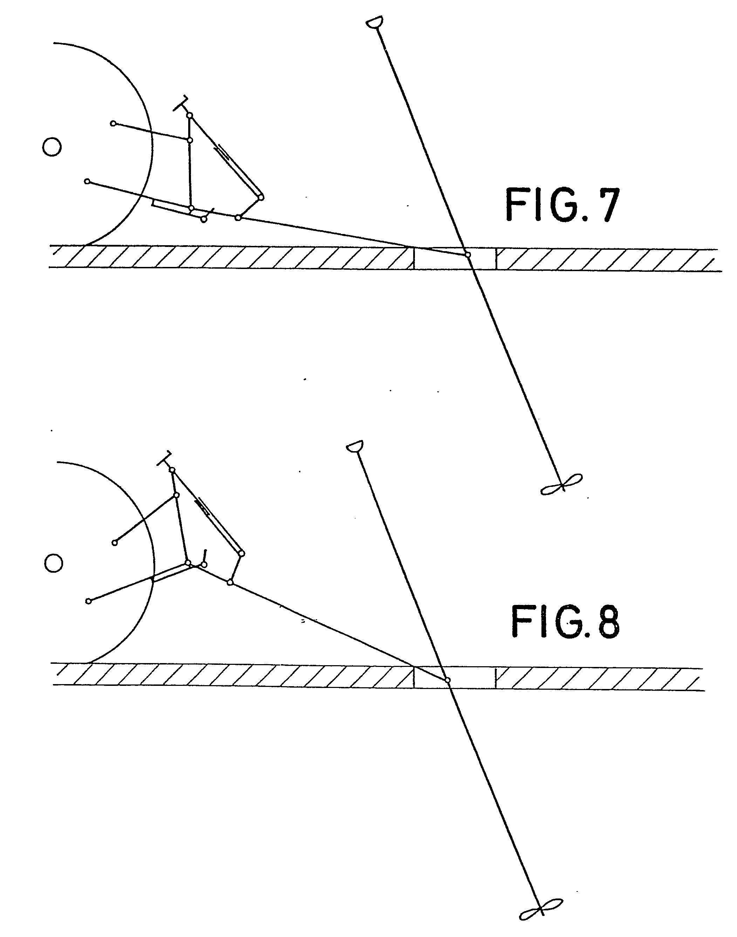

Der Fahrer senkt nun den Einschwenkarm 8 mittels der Schlepperhydraulik so weit ab, bis, wie in Fig. 7 gezeigt, der Einschwenkarm auf dem Rand der Grubenöffnung 28 aufliegt. In dieser Stellung pendelt das Mixerrohr 9 frei.

Durch noch weiteres Absenken der Unterlenker 3 werden die Stützklinken 17 entlastet, so daß sie durch Ziehen am Stahlseil 22 zum Schlepper hin weggeschwenkt werden können. Nun werden die Unterlenker 3 wieder hochgefahren, wobei der Einschwenkarm 8 gegenüber den Unterlenkern zunehmend abknickt und eine stärkere Neigung erfährt. Dies zeigt Fig. 8.

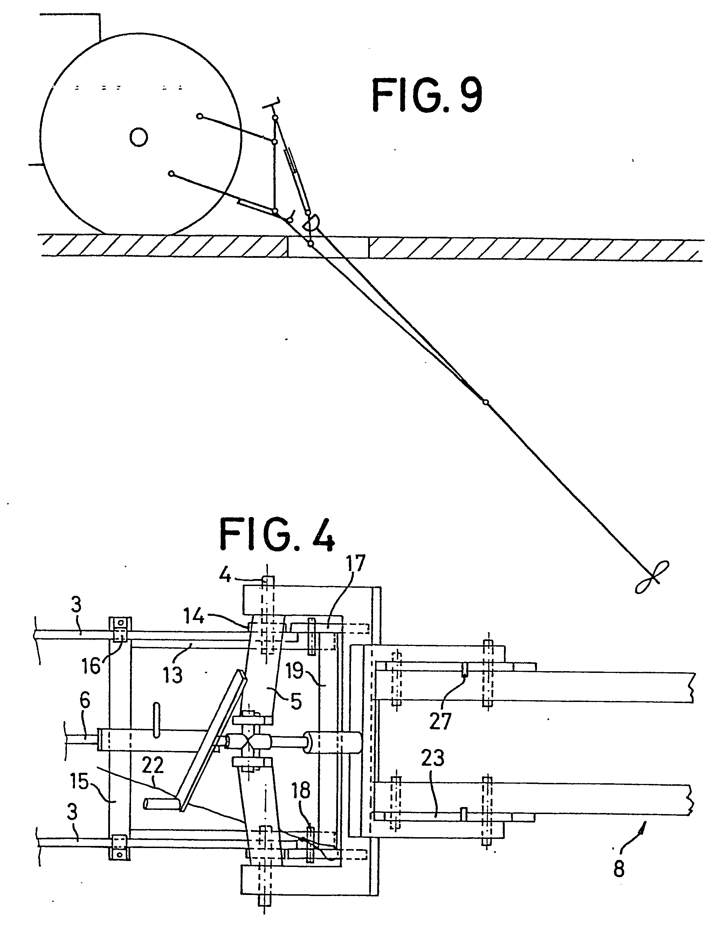

Von dieser Stellung ausgehend braucht der Fahrer nur noch rückwärts zur Grubenöffnung hin zu fahren. Der Einschwenkarm 8 schiebt sich jetzt aufgrund seiner stärkeren Neigung durch die Grubenöffnung 28, wobei er auf dem oberen Rand der Grubenöffnung gleitet. Das Mixerrohr 9 streift dabei den unteren Rand der Grubenöffnung auf der gegenüberliegenden Seite und wird somit selbsttätig geführt und in die Richtung des Einschwenkarms 8 eingestellt. Im Verlauf dieser Fahrbewegung und der damit einhergehenden Absenkung des Einschwenkarms 8 kommt schließlich der Punkt, wo, wie auch Fig. 3 zeigt, das Stellorgan 23, 24 greift. Der Überstand der Laschen 23 kommt an den Scherstiften 27 zur Anlage. Hierdurch wird die Neigung des Einschwenkarms 8 festgelegt und dieser kann, wie Fig. 9 zeigt, ohne Anlage am Grubenrand frei auskragen. Dreht man jetzt an der Handkurbel 26, so ändert sich die Neigung. Dadurch kann man den Propeller 11 auf die beim gegebenen Güllefüllstand richtige Tiefe und auf den günstigsten Strömungsverlauf stufenlos und feinfühlig einstellen.

Würde der Fahrer in den Stellungen nach den Figuren 5 bis 7, d. h. bei eingelegter Stützklappe, mit dem Einschwenkarm 8 oder dem Mixpropeller 11 an einem Hindernis (z. B. Rand der Grubenöffnung) hängenbleiben und die Unterlenker 3 unbedacht hochfahren, so würde diese Überlastung der Stützklinken 17 zu einem sofortigen Abscheren der Schrauben 18 führen. Dieser Vorgang hat zur Folge, daß sich die Traverse 19, welche die beiden Stützklinken 17 miteinander verbindet, auf die oberen Ecken der Verlängerungsschiene 13 aufsattelt. Es gibt dabei zwar einen Ruck, aber der Einschwenkarm 8 und das Mixerrohr 9 fallen nicht unkontrolliert in die Grube, was vor allem dann gefährlich ist, wenn der laufende Propeller am Grubenboden aufschlägt.

Dasselbe gilt in Arbeitsstellung, wenn der Fahrer, ausgehend von Fig. 9, die Unterlenker 3 unbedacht anhebt. Hierbei genügt es schon, wenn der Einschwenkarm 8 an der unteren Kante der Grubenöffnung anliegt. Beim Anheben der Unterlenker versucht das Stellorgan 23, 24 sich zu strecken, wobei die Scherstifte 27 abgeschert werden. Der Mixer senkt sich dadurch nur um einige Zentimeter. Auch hier wird der Fahrer durch den sich ergebenden Ruck aufmerksam und kann später die Scherstifte 27 ersetzen.

## Ansprüche

1. Güllemixer zum Antrieb mittels der Zapfwelle eines Schleppers mit einem an das Dreipunkt-Lenkersystem (3, 6) des Schleppers anschließbaren Anbaurahmen (5) und einem an diesem gelagerten auf und ab schwenkbaren Einschwenkarm (8), an dessen vom Schlepper weggerichtetem Ende ein rohrartiges Mixergehäuse (9) zwischen einer etwa horizontalen Transportstellung und einer etwa vertikalen Einführstellung schwenkbar gelagert ist, und mit einem längenverstellbaren, zwischen dem Anbaurahmen (5) und dem Einschwenkarm (8) als Strebe eingebauten Stellorgan (24), dadurch gekennzeichnet, daß ein ausrückbarer Anschlag (17) vorgesehen ist, der im eingerückten Zustand den Schwenkbereich des Einschwenkarms (8) bezüglich der Unterlenker (3) nach unten begrenzt.

2. Güllemixer nach Anspruch 1, dadurch gekennzeichnet, daß der Anschlag (17) abgestuft (20) ist für wahlweise verschiedene Winkeleinstellungen des Einschwenkarms (8) bezüglich der Unterlenker (3).

3. Güllemixer nach Anspruch 1 dadurch gekennzeichnet, daß der Anschlag als schwenkbare Stützklappe ausgebildet ist.

4. Güllemixer nach Anspruch 1, dadurch gekennzeichnet, daß das Stellorgan einen Spindeltrieb (24) und eine mit diesem gelenkig verbundene Lasche (23) aufweist.

5. Güllemixer nach Anspruch 1, dadurch gekennzeichnet, daß die gegenseitige Beweglichkeit von wenigstens zweien seiner Teile (13, 17 ; 23, 24) mittels eines abtrennbaren (18 ; 27), verformbaren oder unter Überwindung eines Reibschlusses verlagerbaren Elements unter Bereithaltung eines Notlaufwegs begrenzt ist.

6. Güllemixer nach den Ansprüchen 3 und 5, dadurch gekennzeichnet, daß die Stützklappe aus zwei gleichen Stützklinken (17) besteht, die durch eine die Unterlenkerverlängerung (13) überquerende und auf diese aufsattelbare Traverse (19) miteinander verbunden sind, und daß die für die Stützklinken verwendeten Achszapfen (18) bei Überlast abscherbar sind.

7. Güllemixer nach den Ansprüchen 4 und 5, dadurch gekennzeichnet, daß Scherstifte (27) vorgesehen sind, welche beim Strecken des Stellorgans den Spindeltrieb (24) und die Lasche(n) (23) in einer nahezu gestreckten Winkelstellung arretieren.

## Claims

1. Liquid manure mixer for driving by the power take-off shaft of a tractor, having an auxiliary frame (5), which can be connected to the three point linkage (3, 6) of the tractor, and a pivoting arm (8), which can be pivoted up and down, is supported on the auxiliary frame and, at whose end directed away from the tractor, a tubular mixer casing (9) is supported so that it can be pivoted between an approximately horizontal transport position and an approximately vertical insertion position, and having a longitudinally adjustable adjustment element (24) installed as a strut between the auxiliary frame (5) and the pivoting arm (8), characterised in that an extractable stop (17) is provided which, in the engaged condition, limits the pivoting range of the pivoting arm (8) in the downwards direction, relative to the bottom link (3).

2. Liquid manure mixer in accordance with Claim 1, characterised in that the stop (17) is stepped (20) for the selection of various angular positions of the pivoting arm (8) relative to the bottom link (3).

3. Liquid manure mixer in accordance with Claim 1, characterised in that the stop is designed as a pivotable support flap.

4. Liquid manure mixer in accordance with Claim 1, characterised in that the adjustement element has a spindle drive (24) and a strap (23) articulated to the latter.

5. Liquid manure mixer in accordance with Claim 1, characterised in that the capability of relative movement between at least two of its parts (13, 17 ; 23, 24) is limited, while maintaining an emergency movement path, by a severable (18 ; 27), deformable or (on overcoming a frictional connection) displaceable element.

6. Liquid manure mixer in accordance with Claims 3 and 5, characterised in that the support flap consists of two identical support pawls (17), which are mutually connected by a cross-beam (19) crossing the extension (13) of the bottom link and seatable on the latter, and that the journal pins (18) used for the support pawls are shearable in the event of overload.

7. Liquid manure mixer in accordance with Claims 4 and 5, characterised in that shear pins (27) are provided which, on extension of the adjustment element, arrest the spindle drive (24) and the strap(s) (23) in an almost fully extended angular position.

## Revendications

1. Malaxeur à lisier destiné à être entraîné par la prise de force d'un tracteur, pourvu d'un châssis rapporté (5) raccordable au système oscillant à trois points (3, 6) du tracteur et d'un bras pivotant (8), pouvant pivoter vers le haut et vers le bas, monté sur ledit châssis, sur l'extrémité dudit bras oscillant éloigné du tracteur un boîtier malaxeur (9) en forme de tube étant monté pivotant entre une position de transport à peu près horizontale et une position d'introduction à peu près verticale, et pourvu d'un organe de réglage (24) réglable en longueur, incorporé comme jambe de force entre le châssis rapporté (5) et le bras pivotant (8), caractérisé en ce qu'il est prévu une butée (17) débrayable, limitant vers le bas, lorsqu'elle est embrayée, l'amplitude de basculement du bras pivotant (8) par rapport au bras inférieur (3).

2. Malaxeur à lisier selon la revendication 1, caractérisé en ce que la butée (17) comporte des gradins pour différentes positions angulaires, au choix, du bras pivotant (8) par rapport au bras inférieur (3).

3. Malaxeur à lisier selon la revendication 1, caractérisé en ce que la butée est conformée en abattant d'appui basculant.

4. Malaxeur à lisier selon la revendication 1, caractérisé en ce que l'organe de réglage présente une commande à vis (24) et une patte (23) liée, de façon articulée, avec celle-ci.

5. Malaxeur à lisier selon la revendication 1, caractérisé en ce que la mobilité relative d'au moins deux de ses éléments (13, 17 ; 23, 24) est limitée au moyen d'un élément séparable (18, 27), déformable ou déplaçable en surmontant une friction, tout en maintenant une sécurité.

6. Malaxeur à lisier selon les revendications 3 et 5, caractérisé en ce que l'abattant d'appui se compose de deux cliquets d'appui (17) identiques, qui sont liés l'un à l'autre par une traverse (19) transversale à l'allonge (13) du bras inférieur et accouplable à celle-ci, et en ce que les fusées d'essieu (18) utilisées pour les cliquets d'appui sont cisaillables lors d'une surcharge.

7. Malaxeur à lisier selon les revendications 4 et 5, caractérisé en ce que l'on prévoit des goujons de cisaillement (27), qui, lors de l'allongement de l'organe de réglage, arrêtent la commande à vis (24) et la (les) patte(s) (23) dans une position angulaire pratiquement alignée.

FIG.1

FIG.2

FIG.3

# FIG. 5

# FIG. 6

FIG. 7

FIG. 8

FIG. 9

FIG. 4